# EUROPEAN PATENT APPLICATION

(11) **EP 2 131 096 A2**
(43) Date of publication of application: **09.12.2009**
(21) Application number: 09711121.5
(22) Date of filing: 11.02.2009
(51) Int. Cl.: F17D 3/01

(54) **APPARATUS AND METHOD FOR PROCESSING HYDROCARBON LIQUEFIED GAS**

(30) Priority: 11.02.2008 KR 20080012354
(71) Applicant: DAEWOO SHIPBUILDING & MARINE ENGINEERING CO., LTD, Seoul 100-180 (KR)
(72) Inventor: LEE, Jung Han, 656-753 Gyeongsangnam-do (KR); MOON, Young Sik, 656-131 Gyeongsangnam-do (KR); CHOI, Dong Kyu, 656-757 Gyeongsangnam-do (KR); KIM, Young Soo, 656-770 Gyeongsangnam-do (KR); BAE, Jae Ryu, Geoje-shi, Gyeongsangnam-do 656-922 (KR)
(74) Representative: Jehle, Volker Armin
(86) International application number: PCT/KR2009/000623
(87) International publication number: WO 2009/102136

(57) **Abstract**

Disclosed herein is a method and apparatus for processing natural gas composed of various hydrocarbon components for transportation of the natural gas to a demand side without separation of the hydrocarbon components, such that the natural gas can be used by consumers after being separated into the hydrocarbon components according to the needs of the demand side. The apparatus includes a storage tank; and a hydrocarbon liquefied gas mixture accommodated in the storage tank. The mixture contains hydrocarbon components composed of methane, ethane, propane and butane, and is produced by liquefying raw natural gas without changing the relative ratio of methane, ethane, propane and butane in the raw natural gas immediately after extraction from the gas well. The method and apparatus can be applied to floating marine structures.

## Description

### [Technical Field]

The present invention relates to treatment of natural gas, wherein natural gas produced from a gas is liquefied, transported, and supplied to a demand side. More particularly, the present invention relates to a method and apparatus for processing natural gas composed of various hydrocarbon components for transportation of the natural gas to a demand side without separation into the hydrocarbon components, such that the natural gas can be separated into the hydrocarbon components as needed for use at the demand side.

### [Background Art]

Recently, the consumption of natural gas has sharply increased throughout the world. Gas wells or oil wells producing natural gas are generally located far from a demand side of natural gas. Thus, natural gas is transported in a gas state through a gas pipeline on land or under the sea, or is transported long distances to consumers in a liquefied state by liquefied natural gas (LNG) carriers. LNG is obtained by cooling natural gas into a cryogenic state (about -163°C), whereby the volume of the natural gas is reduced to about 1/600 of that at standard temperature and pressure, making it very suitable for long-distance marine transportation.

Natural gas produced from gas wells contains not only various hydrocarbon components, but also impurities such as water, carbon dioxide, and the like. When natural gas is cooled to the cryogenic temperature, the impurities are frozen, thereby blocking the pipes of facilities for the formation or treatment of liquefied natural gas or causing other problems.

Therefore, it is necessary to remove all freezable components from natural gas before liquefaction thereof. Generally, water, carbon dioxide, and heavy hydrocarbon components having five or more carbon atoms (C₅₊) are separated from the natural gas before liquefaction thereof.

Conventionally, various hydrocarbon components besides methane, such as ethane, propane and butane (C₂∼C₄), are separated from the natural gas during liquefaction and are then separately stored, transported and supplied to a demand side. Here, liquefied gas containing propane and butane as main components is referred to as liquefied petroleum gas (LPG) and is widely used as domestic or industrial fuel.

A variety of conventional natural gas liquefaction methods, including an operation of separating hydrocarbon components other than methane from natural gas, are disclosed. For example, the conventional natural gas liquefaction methods are disclosed in U.S. Patent No. 3,763,658, U.S. Patent No. 4,065,278, U.S. Patent No. 5,325,673, EP 0 535 752, and WO 90/00589. Further, WO 2002/32810 and Japanese Non-examined Patent Publication No. Hei 10-28837 disclose pretreatment methods for removing impurities from natural gas before liquefaction thereof.

On the other hand, LNG transported to a demand side is subjected to regasification for supply to consumers in a gas state. Here, the natural gas supplied to the consumers after regasification must satisfy the requirements for the Wobbe Index and heating value. The Wobbe Index, an index of heat energy input to a combustor, is defined as a function of heating value and specific gravity, and is used as an indicator of the interchangeability of fuel gases.

Natural gas from which the hydrocarbon components excluding methane are separated during the regasification has a lower heating value than natural gas which is not subjected to the separation process, and must be subjected to a process for increasing the heating value in order to satisfy the criteria of the heating value at a demand side. On the other hand, if the heating value of LNG transported to the demand side is higher than of the criteria at the demand side, there is a problem in that a suitable amount of nitrogen gas must be mixed with LNG.

As such, in the related art, a liquefaction facility at a production side must be additionally provided with facilities for separating the various hydrocarbon components from the natural gas and separately storing LNG and LPG after the liquefaction of the respective hydrocarbon components. Further, it is necessary to perform the production, storage and transportation of LNG and LPG separately.

### [Disclosure]

### [Technical Problem]

The present invention is directed to solve the problems of the related art as described above, and one aspect of the present invention is to provide a method and apparatus for processing hydrocarbon liquefied gas for transportation of the natural gas composed of various hydrocarbon components to a demand side, without separation into the respective components, such that the natural gas can be used after being separated into the respective components at the demand side as needed. As a result, an unnecessary separation process at a production side can be eliminated, and the adjustment of heating value can be simplified by adjusting the quantity of the separated LPG component according to the desired heating value at the demand side.

### [Technical Solution]

According to one aspect, the present invention provides an apparatus for processing a hydrocarbon liquefied gas mixture, which includes: a storage tank; and a hydrocarbon liquefied gas mixture accommodated in the storage tank, wherein the mixture contains hydrocarbon components composed of methane, ethane, propane and butane, and is produced by liquefying raw natural gas without changing the relative ratio of methane, ethane, propane and butane in the raw natural gas immediately after extraction from a gas well.

The apparatus may include any vessel, such as LNG carriers, LNG RVs (Regasification Vessels), etc., which can sail long distances under their own power at sea, floating offshore structures, such as LNG FSRU, LNG FPSO, etc., which are used in a moored state at a predetermined location at sea most of the time; secured offshore structures, which are used at a secured offshore location; on-land structures, which are used on land near the sea, and the like.

According to another aspect, the present invention provides an apparatus for processing a hydrocarbon liquefied gas mixture, which includes a storage tank capable of accommodating a hydrocarbon liquefied gas mixture produced by liquefying raw natural gas without changing the relative ratio of methane, ethane, propane and butane in the raw natural gas immediately after extraction from a gas well.

According to a further aspect, the present invention provides an apparatus for processing a hydrocarbon liquefied gas mixture, which includes a storage tank; and a hydrocarbon liquefied gas mixture accommodated in the storage tank, wherein the mixture contains methane, ethane, propane, and butane.

The mixture may be free from hydrocarbon molecules having a greater molecular weight than butane.

The mixture may be maintained at a vapor pressure of 2.5 bars or less and a temperature between -163°C and-130°C in the storage tank.

The mixture may have a vapor pressure of 0.7 bars or less in the storage tank. Alternatively, the mixture may have a vapor pressure of 0.25 bars or less in the storage tank.

The mixture may be maintained at a temperature of -163°C--130°C in the storage tank.

The storage tank may include at least one storage tank having a total storage capacity greater than 100,000m³.

The mixture may contain 2.6 mol%-13 mol% of propane with respect to the total amount of the mixture. The mixture may contain 5 mol%-13 mol% of propane with respect to the total amount of the mixture.

The mixture may be produced by a method including obtaining natural gas from the gas well and liquefying the natural gas without removing butane from the natural gas or adding at least one of ethane, propane and butane to the natural gas.

The method may further include removing hydrocarbon molecules having a greater molecular weight than butane from the natural gas.

According to yet another aspect, the present invention provides a method of processing a hydrocarbon liquefied gas mixture, which includes: preparing a storage tank; connecting a transportation tank of a carrier to the storage tank, the transportation tank accommodating a hydrocarbon liquefied gas mixture free from hydrocarbon molecules having a greater molecular weight than butane; and allowing the storage tank to receive the mixture from the transportation tank.

According to yet another aspect, the present invention provides a method of processing a hydrocarbon liquefied gas mixture, which includes: preparing a transportation tank; and supplying a hydrocarbon liquefied gas mixture to the transportation tank, the mixture comprising methane, ethane, propane and butane, and being free from hydrocarbon molecules having a greater molecular weight than butane.

According to yet another aspect, the present invention provides a method of processing a hydrocarbon liquefied gas mixture, which includes: allowing a transportation tank to receive a hydrocarbon liquefied gas mixture produced by liquefying raw natural gas without changing the relative ratio of methane, ethane, propane and butane in the raw natural gas immediately after extraction from a gas well.

The mixture may be maintained at a vapor pressure of 2.5 bars or less and a temperature of -163°C--130°C in the storage tank.

The mixture may have a vapor pressure of 0.7 bars or less in the storage tank. The mixture may have a vapor pressure of 0.25 bars or less in the storage tank.

The mixture may be maintained at a temperature of -163 °C--130°C in the storage tank.

The storage tank may be provided to process the hydrocarbon liquefied gas mixture and may include at least one storage tank having a total storage capacity greater than 100,000m³.

The mixture may contain 2.6 mol% - 13 mol% of propane with respect to the total amount of the mixture. The mixture may contain 5 mol%-10 mol% of propane with respect to the total amount of the mixture.

The method may further include maintaining the mixture at a vapor pressure of 2.5 bars or less in the storage tank.

The method may further include obtaining the natural gas from the gas well; and producing the hydrocarbon liquefied gas mixture by liquefying the natural gas without removing butane from the natural gas or adding at least one of ethane, propane and butane to the natural gas.

The method may include removing hydrocarbon molecules having a greater molecular weight than butane from the natural gas.

In accordance with yet another aspect, the present invention provides an apparatus for producing hydrocarbon liquefied gas by cooling a hydrocarbon gas mixture extracted from a gas well to facilitate storage and transportation of the hydrocarbon gas mixture. The apparatus includes a liquefaction facility, which liquefies the hydrocarbon gas mixture by cooling a high calorific hydrocarbon component and a low calorific hydrocarbon component together without separating the high and low calorific hydrocarbon components from the hydrocarbon gas mixture extracted from the gas well.

The apparatus may further include a liquefied gas storage tank, which stores the hydrocarbon gas mixture cooled and liquefied at the liquefaction facility.

The apparatus may further include a solid substance separator, which separates a solid substance from the hydrocarbon gas mixture extracted from the gas well; and a freezable substance separator, which separates a freezable substance from the hydrocarbon gas mixture extracted from the gas well, the freezable substance capable of being frozen during liquefaction of the hydrocarbon gas mixture.

The high calorific hydrocarbon component may be one selected from the group consisting of ethane, propane, butane and a mixture thereof, and the low calorific hydrocarbon component may be methane.

The apparatus may further include a controller, which controls pressure and temperature in the storage tank to maintain a liquid state of the hydrocarbon liquefied gas accommodated in the storage tank.

The inner pressure of the storage tank accommodating the hydrocarbon liquefied gas may be maintained at 2.5 bars or less.

The inner temperature of the storage tank accommodating the hydrocarbon liquefied gas may be maintained at -163°C--130°C.

In accordance with yet another aspect, the present invention provides a marine structure used at sea and provided with a storage tank capable of storing liquefied gas, which includes any one of the apparatuses described above.

The marine structure may be an LNG FPSO, which can be used in a floating state.

In accordance with yet another aspect, the present invention provides a method of producing hydrocarbon liquefied gas by cooling a hydrocarbon gas mixture extracted from a gas well to facilitate storage and transportation of the hydrocarbon gas mixture. The method includes: transporting a high calorific hydrocarbon component and a low calorific hydrocarbon component together without separating the high and low calorific hydrocarbon components from the hydrocarbon gas mixture extracted from the gas well; and liquefying the hydrocarbon gas mixture by cooling the high and low calorific hydrocarbon components of the hydrocarbon gas mixture together.

Herein, the terms "transportation" or "transports" encompass all concepts of carrying a hydrocarbon gas mixture (that is, natural gas) extracted from a gas well to a liquefaction operation along a pipe, as well as transportation using cargo tankers on land or sea.

The method may further include storing the hydrocarbon liquefied gas in a storage tank after liquefying the hydrocarbon gas mixture.

The method may further include separating a solid substance from the hydrocarbon gas mixture extracted from the gas well; and separating a freezable substance from the hydrocarbon gas mixture extracted from the gas well, the freezable substance being capable of being frozen during liquefaction of the hydrocarbon gas mixture.

The freezable substance may include a hydrocarbon molecule having five carbon atoms or more, such as pentane.

The high calorific hydrocarbon component may be one selected from the group consisting of ethane, propane, butane and a mixture thereof, and the low calorific hydrocarbon component may be methane

Storing the hydrocarbon liquefied gas may include controlling pressure and temperature in the storage tank to maintain a liquid state of the hydrocarbon liquefied gas accommodated in the storage tank.

In accordance with yet another aspect, the present invention provides a method of producing hydrocarbon liquefied gas by cooling a hydrocarbon gas mixture extracted from a gas well to facilitate storage and transportation of the hydrocarbon gas mixture. The method includes: liquefying the hydrocarbon gas mixture by cooling high and low calorific hydrocarbon components of the hydrocarbon gas mixture together, so as to meet a desired heating value at a demand side by controlling the amount of the high calorific hydrocarbon component during regasification.

In accordance with yet another aspect, the present invention provides an apparatus for regasifying hydrocarbon liquefied gas transported to a demand side to deliver the hydrocarbon liquefied gas to end users, in which the hydrocarbon liquefied gas is obtained by liquefying high and low calorific hydrocarbon components together without separating the high and low calorific hydrocarbon components extracted from a gas well. The apparatus includes a hydrocarbon separator which separates the high and low calorific hydrocarbon components from each other based on a difference in vaporization temperature between the high and low calorific hydrocarbon components during the phase transformation of the hydrocarbon liquefied gas from liquid to gas.

The apparatus may include a heating mechanism, which heats the hydrocarbon liquefied gas supplied to the hydrocarbon separator.

The heating mechanism may include at least one of a heater and a heat exchanger.

The hydrocarbon separator may be a gas-liquid separator, which separates a liquid component abundant in the high calorific hydrocarbon component and a gas component abundant in the low calorific hydrocarbon component.

The heat exchanger may use a heat source to heat the hydrocarbon liquefied gas, the heat source being supplied from the low calorific hydrocarbon component separated by the hydrocarbon separator.

The apparatus may further include a small distillation tower, which primarily receives the liquid component separated by the gas-liquid separator and secondarily separates the high and low calorific hydrocarbon components from each other.

The low calorific hydrocarbon component secondarily separated by the small distillation tower may be mixed with the low calorific hydrocarbon component primarily separated by the gas-liquid separator.

The high calorific hydrocarbon component secondarily separated by the small distillation tower may be stored in a separate storage tank or used as fuel.

The low calorific hydrocarbon component separated by the hydrocarbon separator may be cooled or liquefied through heat exchange with the hydrocarbon liquefied gas in the heat exchanger.

The apparatus may further include an evaporator, which evaporates the low calorific hydrocarbon component separated by the hydrocarbon separator to deliver the evaporated low calorific hydrocarbon component to end users.

The apparatus may reduce the heating value of the low calorific hydrocarbon component separated by the hydrocarbon separator by mixing nitrogen therewith.

The apparatus may further include a bypass line, which bypasses some of the hydrocarbon liquefied gas supplied to the hydrocarbon separator to be mixed with the low calorific hydrocarbon component separated by the hydrocarbon separator.

The apparatus may further include a heating mechanism, which heats the hydrocarbon liquefied gas supplied to the hydrocarbon separator, and the bypass line may be arranged to pass through the heat exchanger, where heat exchange is performed between the hydrocarbon liquefied gas supplied to the hydrocarbon separator and the low calorific hydrocarbon component separated by the hydrocarbon separator.

The apparatus may further include another small distillation tower located near the small distillation tower to additionally separate the high calorific hydrocarbon component, which has been separated by the small distillation tower.

The apparatus may include a storage tank to accommodate the high calorific hydrocarbon component separated by the hydrocarbon separator.

The storage tank may be one of a plurality of liquefied gas storage tanks which store the hydrocarbon liquefied gas to be supplied to the hydrocarbon separator.

The high calorific hydrocarbon component separated by the hydrocarbon separator may be stored in the storage tank after expansion by an expansion valve.

The high calorific hydrocarbon component separated by the hydrocarbon separator may be stored in the storage tank after being heated by a heater, and boil-off gas generated in the storage tank may be discharged from the storage tank and then mixed with the low calorific hydrocarbon component separated by the hydrocarbon separator.

In accordance with yet another aspect, the present invention provides a marine structure used at sea and provided with a storage tank capable of storing liquefied gas. The marine structure includes any one of the apparatuses for regasifying hydrocarbon liquefied gas described above.

The marine structure may be one of LNG RV and LNG FPSO, which can be used in a floating state.

In accordance with yet another aspect, the present invention provides a method of regasifying hydrocarbon liquefied gas transported to a demand side to deliver the hydrocarbon liquefied gas to end users, in which the hydrocarbon liquefied gas is obtained by liquefying high and low calorific hydrocarbon components together without separating the high and low calorific hydrocarbon components extracted from a gas well. The method includes separating the high and low calorific hydrocarbon components from each other based on a difference in vaporization temperature between the high and low calorific hydrocarbon components during the phase transformation of the hydrocarbon liquefied gas from liquid to gas.

The method may further include heating the hydrocarbon liquefied gas to partially evaporate the hydrocarbon liquefied gas before separating the hydrocarbon components.

The step of heating the hydrocarbon liquefied gas may be performed using a heat source supplied from the low calorific hydrocarbon component separated by the hydrocarbon separator.

The method may further include secondarily separating the high and low calorific hydrocarbon components from a liquid component primarily separated in the step of separating the hydrocarbon components.

The low calorific hydrocarbon component secondarily separated in the step of secondarily separating the components may be mixed with the low calorific hydrocarbon component primarily separated in the step of separating the hydrocarbon components.

The high calorific hydrocarbon component secondarily separated in the step of secondarily separating the hydrocarbon components may be stored in a separate storage tank or used as fuel.

The low calorific hydrocarbon component separated in the step of separating the hydrocarbon components may be cooled or liquefied through heat exchange with the hydrocarbon liquefied gas which is not separated into the high and low calorific hydrocarbon components.

The low calorific hydrocarbon component separated in the step of separating the hydrocarbon components may be delivered in an evaporated state to end users.

The method may further include reducing the heating value of the low calorific hydrocarbon component separated in the step of separating the hydrocarbon components by mixing nitrogen therewith.

The method may further include bypassing some of the hydrocarbon liquefied gas, which is not separated into the high and low calorific hydrocarbon components, to mix the same with the low calorific hydrocarbon component separated in the step of separating the hydrocarbon components.

The method may further include separating the high calorific hydrocarbon component through a more precise distillation of the high calorific hydrocarbon component, which has been secondarily separated in the step of secondarily separating the hydrocarbon components.

The high calorific hydrocarbon component separated in the step of separating the hydrocarbon components may be stored in a storage tank after expansion by an expansion unit.

The high calorific hydrocarbon component separated in the step of separating the hydrocarbon components may be stored in the storage tank after being heated by a heater, and boil-off gas generated in the storage tank may be discharged from the storage tank and then mixed with the low calorific hydrocarbon component separated in the step of separating the hydrocarbon components.

### [Advantageous Effects]

As described above, according to an embodiment of the present invention, the method and apparatus for processing hydrocarbon liquefied gas can allow natural gas composed of various hydrocarbon components to be transported to a demand side without separation into the respective hydrocarbon components and to be used, after being separated into the components as needed, at the demand side.

Therefore, the method and apparatus according the embodiment of this invention can eliminate an unnecessary separation process at a production area and allows easy adjustment of the heating value by adjusting the LPG components in the natural gas according to a desired heating value at a demand side.

### [Description of Drawings]

Figure 1 is a flowchart depicting a method of processing natural gas according to one embodiment of the present invention compared with a conventional method;
Figure 2 is a flowchart depicting a method of processing natural gas according to one embodiment of the present invention; and
Figures 3 to 7 are diagrams depicting apparatuses for regasifying hydrocarbon liquefied gas according to the first to the fifth embodiments of the present invention.

### [Best Mode]

According to a conventional method and apparatus for processing natural gas, all freezable components such as water or moisture, carbon dioxide and the like, or corrosive components such as hydrogen sulfide, can be removed from natural gas before liquefaction of the natural gas extracted from a gas well. Further, since heavy hydrocarbon components, which have five or more carbon atoms (C₅₊), such as pentane, can be frozen during the liquefaction of the natural gas, the heavy hydrocarbon components can be separated from the natural gas before the liquefaction of the natural gas.

Natural gas can be extracted not only from the gas well but also from gas remaining in an oil well after separating oil and water therefrom. Therefore, "natural gas extracted from a gas well" encompasses all concepts including natural gas extracted from the oil well as mentioned above.

During liquefaction of the natural gas, ethane, propane, and butane are separated from the natural gas to form a hydrocarbon gas mixture. Here, liquefied petroleum gas (LPG) refers to a hydrocarbon liquefied gas mixture which is formed by separating and liquefying some ethane and propane and all of the butane from the natural gas. LPG is transported long distances using an LPG carrier that is particularly designed to transport LPG. The remaining natural gas from which LPG components are separated is mainly composed of methane and contains a small amount of ethane. Here, liquefied natural gas (LNG) is obtained by liquefying the remaining natural gas. LNG is transported long distances by an LNG carrier that is particularly designed to transport LNG. As such, LNG and LPG are transported by separate carriers that are particularly designed therefor, respectively.

WO 90/00589 discloses a treatment and transportation method different from the conventional treatment and transportation method described above. In the method disclosed in WO 90/00589, organic conditioners such as ethane, butane, carbon dioxide and the like are added to natural gas to produce a gas with a different composition, which in turn is liquefied to produce a liquefied heavy gas (LHG).

At this time, heavy hydrocarbon components (pentane and the like) having five or more carbon atoms (C₅₊) are not separated from the natural gas. The method of processing and transporting natural gas through production of LHG enables the simplification of a process prior to liquefaction, time and cost reductions in processing the separated heavy hydrocarbon components, and provides a higher thermal efficiency than a conventional LNG system. However, since it is necessary for LHG to be stored at a high pressure of 34.5-96.5 bars, there is a need for a storage tank that is particularly designed and reinforced to endure such a high pressure.

According to the present invention, freezable components, such as water or moisture, carbon dioxide and the like, or corrosive components such as hydrogen sulfide are substantially removed from natural gas immediately after extraction from a gas well. Further, heavy hydrocarbon components having five or more carbon atoms (C₅₊) are also substantially removed from the natural gas before liquefaction thereof. Here, the substantial removal of the heavy hydrocarbon components having five or more carbon atoms (C₅₊) does not mean 100% complete separation thereof, but separation of the freezable or corrosive heavy hydrocarbon components to such an extent as not to cause problems in use of various systems.

On the other hand, LPG components such as propane, butane and the like are not intentionally separated from the natural gas before the liquefaction thereof. Here, although some amounts of ethane, propane or butane can be unintentionally removed during removal of the heavy hydrocarbon components having five or more carbon atoms (C₅₊), such as pentane and the like, or during removal of other components such as solid substances, freezable components and the like, it cannot be referred to as an intentional removal of ethane, propane or butane. Herein, non-separation of ethane, propane and butane before the liquefaction of the natural gas means that a separate process for separating ethane, propane and butane is not performed, and does not deny even the possibility that some amounts of ethane, propane and butane are unintentionally separated during separation of other components (including not only the heavy hydrocarbon components having five or more carbon atoms, such as pentane and the like, but also solid substances or freezable components).

Accordingly, hydrocarbon liquefied gas according to this invention contains methane, ethane, propane and butane at the same ratio as that of raw natural gas immediately after being extracted from a gas well. In other words, according to this invention, the same LPG components as those initially contained in the raw natural gas are contained in the hydrocarbon liquefied gas. Herein, the hydrocarbon liquefied gas according to this invention and the raw natural gas containing methane, ethane, propane and butane at the same ratio means that the hydrocarbon liquefied gas contains substantially the same amounts of methane, ethane, propane and butane as those of the raw natural gas since the process of separating methane, ethane, propane and butane is not performed irrespective of the possibility that some amount of butane or the like can be separated and removed during the separation of the heavy hydrocarbon components having five or more carbon atoms (C₅₊), such as pentane and the like.

According to one embodiment of this invention, a facility for processing the raw natural gas extracted from the gas well may be an on-land or marine (offshore) plant. Examples of the system include LNG FPSO (Floating, Production, Storage and Offloading), which is used in a floating state on the sea.

The hydrocarbon liquefied gas is stored in a carrier and is then transported long distances to consumers by the carrier. Since the amounts of propane and butane in the hydrocarbon liquefied gas are much smaller than that of methane, the hydrocarbon liquefied gas according to the present invention may be transported by general LNG carriers or LNG RVs (Regasification Vessels). In other words, there is no need for fabrication of a separate carrier to transport the hydrocarbon liquefied gas according to this invention.

Further, in order to transport the hydrocarbon liquefied gas according to this invention, there is no need for a storage tank or carrier that is particularly designed to transport LHG at a high pressure, as disclosed in WO 90/00589. Further, according to the present invention, most of the heavy hydrocarbon components of C₅₊ are removed before liquefaction of natural gas, and there is no need for addition of organic conditioners such as ethane, propane or carbon dioxide to the natural gas extracted from the gas well. Considering exorbitant costs and efforts in fabrication of the LNG carrier and LHG carrier, the present invention provides remarkable effects of enabling supply of natural gas to consumers at lower costs and efforts.

Generally, the heating value of natural gas from which hydrocarbon components excluding methane are separated during liquefaction of the natural gas is lower than that of natural gas before the hydrocarbon components excluding methane are separated immediately after extraction of the natural gas from the gas well. Conventionally, if the heating vale of natural gas transported to a demand side is still higher than a desired heating value at the demand side, it is necessary to lower the heating value by adding a suitable amount of nitrogen to the natural gas. However, since the addition of nitrogen has a limit, imports of natural gas are limited to gas wells that produce natural gas having a low heating value.

Further, conventionally, if the heating value of the natural gas transported to the demand side is lower than the desired heating value at the demand side, it is necessary to add a high calorific hydrocarbon component (that is, an LPG component), which has been separated with consumption of high energy from the natural gas before transportation thereof, to the natural gas.

For this purpose, conventionally, a production side is provided with a facility for separating various LPG components, a facility for liquefying the separated LPG components, a facility for separately storing the LPG components, and the like. In addition, conventionally, a demand side is provided with a facility for adding LPG components to natural gas transported thereto in order to adjust the heating value of the natural gas. As a result, the conventional technique requires high costs and energy.

According to this invention, natural gas (that is, hydrocarbon liquefied gas) transported long distances from an LNG production area by the LNG carriers or the like is transferred to and contained in a storage tank in an on-land or marine (offshore) plant located near end users (that is, a demand side) of the natural gas. An example of the plant used in a floating state on the sea near a demand side includes LNG FSRU (Floating Storage and Regasification Unit). In the case where the hydrocarbon liquefied gas is transported by LNG RV, it is possible to omit a process of transferring the hydrocarbon liquefied gas to the plant at a demand side.

The hydrocarbon liquefied gas accommodated in the storage tank of the plant is subjected to regasification before supplying it to end users. According to the present invention, in order to meet a desired heating value at a demand side, LPG components (such as propane, butane, ethane, and the like) contained in the hydrocarbon liquefied gas are at least partially separated during the regasification. The separated LPG components such as propane, butane, ethane, and the like can be stored in a separate storage tank after being liquefied into LPG.

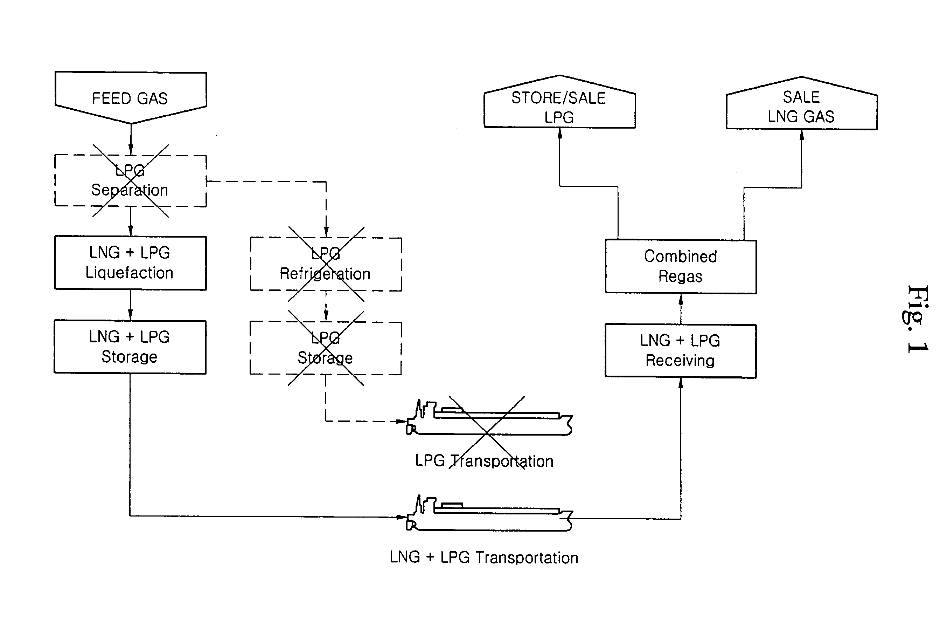

Figure 1 is a flowchart of a method of processing natural gas according to one embodiment of the present invention in comparison with a conventional method. In Figure 1, dotted blocks indicate processes which are required by the conventional method but are omitted in the method according to this embodiment of the invention.

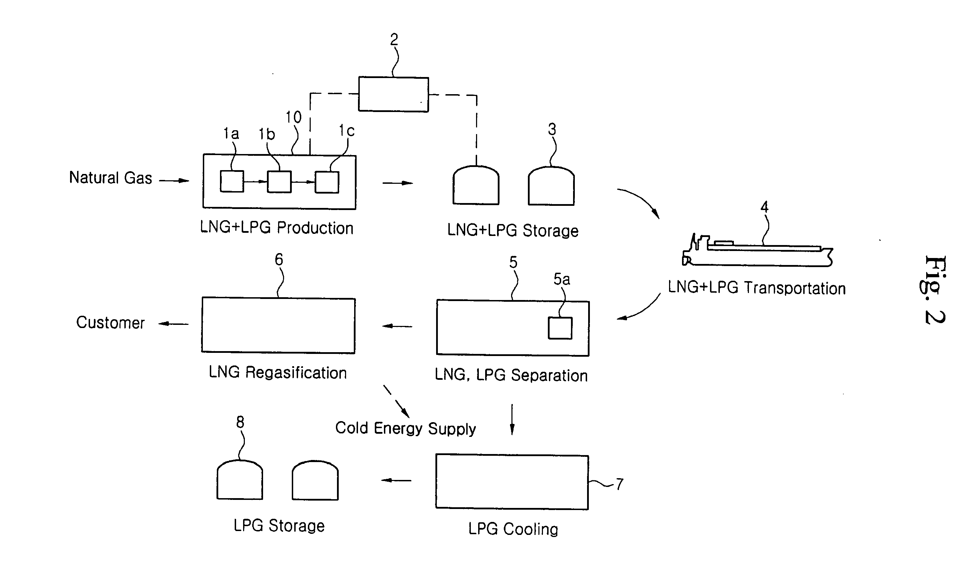

Figure 2 is a flowchart of a method of processing natural gas according to one embodiment of the present invention. As shown in Figure 2, the method according to the embodiment of this invention includes transporting the of raw natural gas produced from a gas well to a demand side after liquefaction without change, separating high calorific components having high heating values while regasifying hydrocarbon liquefied gas at the demand side, and supplying the hydrocarbon gas to consumers.

### Production and Liquefaction of Natural Gas

First, raw natural gas produced from a gas well is liquefied by a liquefaction mechanism 1c of an apparatus for producing hydrocarbon liquefied gas 1 for convenient storage and transportation of the natural gas. The apparatus 1 liquefies various hydrocarbon components contained in the raw natural gas by cooling the hydrocarbon components through heat exchange with a coolant.

In the liquefied natural gas (that is, hydrocarbon liquefied gas), LNG components (for example, those of methane; low calorific components) and LPG components (for example, those mainly propane and butane; high calorific components) are mixed together. The liquefied natural gas with the LNG components and LPG components mixed therein may be temporarily stored in a liquefied gas storage tank 3, as needed. For the storage tank 3, a storage tank used only for LNG may be used.

According to this invention, since there is no need for separation of the LPG components in the apparatus 1 at a production side, a facility for separating LPG is not needed.

According to this invention, the apparatus 1 and the liquefied gas storage tank 3 may be installed in a floating marine structure such as an LNG FPSO (Floating, Production, Storage and Offloading). The LNG FPSO refers to a floating marine structure that directly liquefies produced natural gas into LNG at sea and stores the LNG in a storage tank thereof to deliver the LNG stored in the LNG storage tank to an LNG carrier as needed.

Immediately after being produced from the gas well, raw natural gas contains not only the various hydrocarbon components, but also impurities, such as soil, water or carbon dioxide, which can be frozen and block a pipe of a system for forming or processing liquefied natural gas when the natural gas is cooled to a cryogenic temperature. Therefore, solid substances such as soil, freezable components, that is, water, carbon dioxide, heavy hydrocarbon components having five or more carbon atoms (C₅₊) and the like, are all substantially removed from the natural gas through a solid substance separator 1a and a freezable substance separator 1b before liquefaction of the natural gas.

Herein, the terms "remove" or "removal" mean that a certain component is intentionally (artificially) removed from the raw natural gas by a typical classification process immediately after being extracted from the gas well. In other words, since it is impossible in practice to completely classify a certain component, the terms "remove" or "removal" mean that the certain component is classified to an allowable degree by the typical classification process, and does not mean a 100% complete removal of the certain component.

For the apparatus 1 and the storage tank 3, a conventional apparatus and storage tank used for production and storage of LNG may be used.

Conventionally, LPG components liquefied prior to other components are separated upon liquefaction of natural gas. According to this invention, however, only the solid and the freezable substances are substantially removed from the raw natural gas upon extraction thereof from the gas well, but various hydrocarbon components are liquefied and stored in a mixed state without being individually separated from the natural gas according to a liquefying order.

As a result, methane, ethane, propane and butane contained in the raw natural gas upon extraction from the gas well substantially remain in a liquefied state in the hydrocarbon liquefied gas mixture according to this invention. In other words, the hydrocarbon liquefied gas mixture according to this invention has substantially the same compositional ratio of hydrocarbon components as that of original raw natural gas.

Therefore, the present invention can omit a process of separating the LPG components upon liquefaction of the natural gas, thereby simplifying the overall system and storage facilities.

Further, the apparatus 1 may include a controller 2 which controls pressure and temperature inside the storage tank 3 in order to maintain the liquid state of the hydrocarbon liquefied gas accommodated in the storage tank 3.

### Transportation of Liquefied Natural Gas

Hydrocarbon liquefied gas (LNG components + LPG components) temporarily stored in the storage tank 3 is transported from a production side to a demand side (consumers) through a gas pipe (not shown) or the like on land or under the sea. For a liquefied gas carrier 4, a conventional carrier used for LNG transportation such as LNG carriers, LNG RVs, and the like may be used.

The hydrocarbon liquefied gas mixture is accommodated in a storage tank provided to the apparatus 1 or the liquefied gas carrier 4. According to this invention, the hydrocarbon liquefied gas mixture is composed of methane, ethane, propane and butane, but does not substantially contain hydrocarbon molecules with higher molecular weights than butane.

In other words, according to this invention, although the hydrocarbon molecules having a higher molecular weight than butane, for example, pentane and the like, are removed as much as possible by a typical classification method, a very small amount of hydrocarbon molecules with higher molecular weights than butane are not removed by the typical classification method and may be contained in the hydrocarbon liquefied gas mixture.

In the storage tank, the hydrocarbon liquefied gas mixture may be maintained at a vapor pressure of 2.5 bars or less, preferably at a vapor pressure of 0.7 bars or less, and more preferably at a vapor pressure of 0.25 bars or less. Further, the hydrocarbon liquefied gas mixture may be maintained at a temperature of -163 °C--130°C in the storage tank. Under such pressure and temperature conditions, the hydrocarbon liquefied gas mixture can be maintained in a liquid state.

According to one embodiment of the invention, storage tanks for storing the hydrocarbon liquefied gas mixture in a single vessel or structure may have a total storage capacity of 100,000m³ or more.

The hydrocarbon components having a higher molecular weight than butane are substantially removed from the hydrocarbon liquefied gas mixture. Further, according to one embodiment of the invention, the hydrocarbon liquefied gas mixture may contain 2.6-13 mol% of propane, and preferably 5-13 mol% of propane, although there can be slight differences among gas wells.

Conventionally, the liquefied natural gas is transported with 2.5 mol% or less of propane contained therein through a process of removing LPG components (mainly composed of propane and butane, and some amount of ethane). Here, although the amount of propane contained in raw natural gas varies with the gas well, the liquefied natural gas can contain approximately 5 mol% or less of propane even after the process of removing LPG components.

As described above, the hydrocarbon liquefied gas mixture is produced by extracting raw natural gas from a gas well and then liquefying the natural gas without substantially removing butane from the raw natural gas or without adding any amount of ethane, propane and butane thereto. In this regard, it should be noted that hydrocarbon molecules having a higher molecular weight than butane may be removed from the raw natural gas.

Here, according to the present invention, since a 100% complete classification of hydrocarbon components cannot be substantially accomplished, some amounts of hydrocarbon components such as butane or propane can be removed during removal of the heavy hydrocarbon components, such as pentane, which have a higher hydrocarbon molecular weight than butane.

### Regasification of Liquefied Natural Gas Transported to Demand Side

At a demand side, the hydrocarbon liquefied gas mixture with LNG components and LPG components mixed therein is transferred from the hydrocarbon liquefied gas carrier 4 and is separated into the LNG components and the LPG components by a separating facility 5, which are then supplied to another demand side or stored. The separating facility 5 may be provided with a storage tank 5a that temporarily stores the hydrocarbon gas mixture supplied from the carrier 4 before a regasification process.

Since the LPG components, i.e. ethane, propane and butane, have two or more carbon atoms, the LPG components have higher heating values than the LNG components, which are mainly composed of methane having a single carbon atom (in which a small amount of ethane can be contained). Therefore, since natural gas has a significantly higher heating value when the LPG components are not removed therefrom, the present invention eliminates a heating value increasing facility from the demand side.

Here, in the case where a desired heating value at a demand side is lower than that of natural gas transported thereto, it is possible to meet the desired heating value by separating the LPG components with the separating facility 5. In other words, a relatively small amount of LPG components (high calorific components) is removed and liquefied for supply to a demand side where a high heating value is demanded, whereas a relatively large amount of LPG components is removed and liquefied for supply to a demand side where a low heating value is demanded. As such, according to the present invention, the demand side is provided with the separating facility 5 (that is, an apparatus for regasifying or processing hydrocarbon liquefied gas) for separating the LPG components.

Low calorific gas-phase components and high calorific liquid-phase components, such as propane and butane, are separated from each other by evaporating at least a part of the low calorific component from the hydrocarbon liquefied gas mixture in the separating facility 5. A separated hydrocarbon liquid comprising propane and butane is a high calorific component having a higher heating value than boil-off hydrocarbon gas comprising evaporated methane and the like. The heating value is measured in units of energy/mol, and the separated hydrocarbon liquid may comprise a small amount of ethane.

After the high calorific LPG components are separated in the separating facility 5, the low calorific LNG components mainly composed of methane are subjected to regasification through an LNG regasifying facility 6 for supply to the demand side. Further, the separated LPG components are cooled by an LPG cooling facility 7 and are stored in a condensed state in an LPG storage tank 8. Then, LPG can be stored in a small pressure container, as needed, and delivered to consumers, such as homes or factories.

Since the LPG components have higher liquefaction points than the LNG components, it is advantageous to use cold energy generated during the regasification of LNG in the LNG regasifying facility 6 for cooling the LPG components in the LPG cooling facility 7.

According to the present invention, the separating facility 5, the LNG regasifying facility 6, and the LPG cooling facility 7 may be installed in the floating marine structures such as LNG FSRU or LNG FPSO. The LNG FSRU is a floating marine structure that stores LNG discharged from an LNG carrier in a storage tank at sea distant from land and supplies LNG to consumers on land after regasification of LNG as needed. The LNG RV is a floating marine structure which can perform transportation and regasification of LNG using a regasification facility mounted on an LNG carrier.

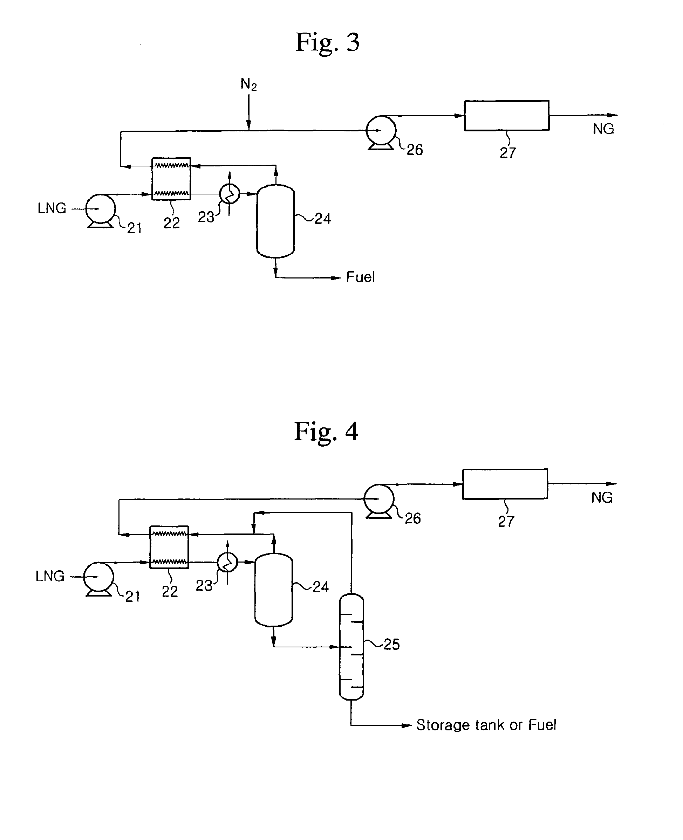

Hereinafter, methods and apparatuses for regasifying hydrocarbon liquefied gas according to exemplary embodiments of this invention will be described in detail with reference to the accompanying drawings. Figures 3 to 7 are diagrams of apparatuses for regasifying hydrocarbon liquefied gas according to the first to the fifth embodiments of the present invention.

According the first embodiment, a method of regasifying hydrocarbon liquefied gas includes separating some amounts of high calorific hydrocarbon components from the hydrocarbon liquefied gas using a separator; and adding nitrogen to the hydrocarbon liquefied gas to meet a desired heating value at a demand side, during regasification and supply of the hydrocarbon liquefied gas to respective consumers, in which the hydrocarbon gas has been produced from a gas well and transported in a liquefied state to the demand side.

Referring to Figure 3, the hydrocarbon liquefied gas transferred from the storage tank 5a (see Figure 2) is compressed to a low pressure by a transfer pump 21 and is then supplied to a heat exchanger 22. The hydrocarbon liquefied gas is subjected to primary heating while passing through the heat exchanger 22. At this time, the hydrocarbon liquefied gas may be heated by the heat exchanger 2 to be partially evaporated. After the primary heating by the heat exchanger 22, the hydrocarbon liquefied gas is supplied to a heater 23. Then, the hydrocarbon liquefied gas heated by the heater 23 is supplied to a separator 24.

In Figure 3, the hydrocarbon liquefied gas is shown as being partially evaporated and supplied to the separator. However, it should be noted that naturally or intentionally evaporated natural gas may be partially condensed and supplied thereto.

The components evaporated by heat from the heater 23 are hydrocarbon components (mainly composed of methane) having lower heating values. Generally, as the heating value is lowered, that is, as the number of carbon atoms in a hydrocarbon molecule is lowered, the liquefaction temperature is also lowered, thereby causing the hydrocarbon molecules to be evaporated faster than other hydrocarbon components.

With the low calorific components evaporated by the heater 23, the hydrocarbon liquefied gas in a mixed state of gas and liquid is separated into gas components and liquid components by the separator 24. Then, the liquid components, that is, the high calorific components, are supplied to a storage tank (not shown) to be stored or used as fuel for propellers, generators, and the like.

Here, according to the first embodiment, all of the liquid components separated by the separator 24 are used as fuel for generators and the like. To this end, the temperature of the separator 24 can be controlled by adjusting the total heating value of the heater 23 to allow only a desired amount of fuel to be separated by the separator 24. In other words, according to the first embodiment, only the amount of high calorific components for use as fuel may be separated, instead of completely separating the high calorific components from the hydrocarbon liquefied gas until the desired heating value of the demand side is obtained.

As such, according to the first embodiment, since some of the high calorific components can be separated from the hydrocarbon liquefied gas and completely consumed as fuel for the generators and the like, there is no need for separate storage tanks or associated facilities for storing the liquid components separated from the hydrocarbon liquefied gas.

Conventionally, the high calorific components such as butane and propane are separated and sold as LPG using a device referred to as a column for precisely separating LPG components from the hydrocarbon liquefied gas. On the other hand, according to the first embodiment, since the high calorific components are separated and used as fuel for generators and the like, there is no need for a precise separation of butane, propane and the like, thereby providing a merit in that the high calorific components can be separated using a simple device such as the separator 24.

After the liquid components are separated by the separator 24, the remaining gas components are supplied back to the heat exchanger 22 and condensed therein. Cold energy for condensation of the gas components may be obtained from the hydrocarbon liquefied gas supplied from the storage tank to the heat exchanger 22 by the transfer pump 21. According to the first embodiment, the gas components separated by the separator 24 can be cooled and condensed via heat exchange with the hydrocarbon liquefied gas in the heat exchanger 22, so that liquid is transferred by the pump instead of transferring the gas component by a compressor. As a result, the transfer operation can be performed with more efficiency at low cost, thereby enabling energy reduction.

Although the hydrocarbon liquefied gas condensed by the heat exchanger 22 has a reduced total heating value due to partial separation of the high calorific components, the condensed hydrocarbon components may still have a higher heating value than a desired heating value at a demand side. Therefore, nitrogen may be added to the condensed hydrocarbon components to precisely satisfy the desired heating value.

Either gaseous or liquid nitrogen may be added. A device for adding gaseous nitrogen may include a nitrogen suctioning machine (not shown) for suctioning gaseous nitrogen into the hydrocarbon liquefied gas, and a nitrogen valve (not shown) for adjusting the amount of nitrogen to be added, and the like. On the other hand, a device for adding liquid nitrogen may include a nitrogen mixer (not shown) for mixing the liquid nitrogen with the hydrocarbon liquefied gas, and a nitrogen valve (not shown) for adjusting the amount of nitrogen to be added. The added amount of nitrogen can be accurately adjusted by regulating the opening/closing of the nitrogen valve by a controller (not shown).

The nitrogen suctioning machine, the nitrogen mixer, the nitrogen valve, and the like may have any configurations as long as they can add nitrogen to the hydrocarbon liquefied gas.

According to the first embodiment, nitrogen is added in a much smaller amount than in the conventional technique, where the heating value is adjusted only through the addition of nitrogen, thereby significantly reducing nitrogen consumption. This provides remarkable effects in that a need for a separate nitrogen producing device can be eliminated, and in that the heating value can be sufficiently adjusted only with a nitrogen producing device of a small capacity. As such, operation costs of the apparatus can be reduced by reducing nitrogen consumption.

Then, the hydrocarbon liquefied gas satisfying the desired heating value by the addition of nitrogen is compressed to a high pressure with a high pressure pump 26, evaporated with a high pressure evaporator 27, and is supplied to end consumers.

Methods of regasifying hydrocarbon liquefied gas according to the second to fifth embodiments of this invention include separating some amounts of high calorific components by partially evaporating the hydrocarbon liquefied gas during regasification and supply of the hydrocarbon liquefied gas to respective consumers, in which the hydrocarbon liquefied gas has been produced from a gas well and transported in a liquefied state.

In the method and apparatus for regasifying hydrocarbon liquefied gas according to the first embodiment, nitrogen is added to adjust the heating value so as to satisfy the requirements of a demand side after separating the high calorific components. On the other hand, in the method and apparatus for regasifying hydrocarbon liquefied gas according to the second to fifth embodiments, the high calorific components are separated to satisfy the requirements of a demand side without adding nitrogen.

First, the apparatus for regasifying hydrocarbon liquefied gas according to the second embodiment will be described with reference to Figure 4. For convenience of description, the same or similar components as those of the first embodiment will be denoted by the same reference numerals and a detailed description thereof will be omitted herein.

In Figure 4, hydrocarbon liquefied gas is supplied from a storage tank to a heater 23 by a transfer pump 21. Then, the hydrocarbon liquefied gas is heated by the heater 23 to be partially evaporated and is then supplied to a separator 24. A heat exchanger 22 may be disposed between the transfer pump 21 and the heater 23.

The components evaporated by heat from the heater 23 are low calorific components (mainly composed of methane). Generally, as the heating value is lowered, that is, as the number of carbon atoms in a hydrocarbon molecule is lowered, the liquefaction temperature is also lowered, thereby causing a faster evaporation of the hydrocarbon molecule than other hydrocarbon components.

With the low calorific components evaporated by the heater 23, the hydrocarbon liquefied gas in a mixed state of gas and liquid is separated into gas and liquid components by the separator 24. Then, the liquid components, that is, the high calorific components, are supplied to a storage tank (not shown) to be stored or used as fuel for propellers, generators, and the like.

According to the second embodiment, a small distillation tower 25 may be used for a more precise separation of the liquid components. Specifically, the small distillation tower 25 is used for secondary separation of the components which have been primarily separated by the separator 24. Therefore, a small inexpensive distillation tower may be used instead of a large expensive distillation tower, which is conventionally used alone to separate the hydrocarbon components.

In other words, since most (approximately 90% or more) of the low calorific components contained in the hydrocarbon liquefied gas are primarily separated by the separator 24, the amount of the low calorific components to be processed by the small distillation tower 25 is reduced to about 10% or less. Thus, the apparatus according to this embodiment enables significant reduction in size or capacity of the small distillation tower 25, thereby reducing initial investment and operation costs. On the other hand, when cold energy from the hydrocarbon liquefied gas is used in the separation process of the small distillation tower 25, it is possible to reduce operating costs.

After being secondarily separated by the small distillation tower 25, the low calorific components may be mixed with the gas components previously separated by the separator 24 prior to a subsequent process. The low calorific components separated from the hydrocarbon liquefied gas by the separator 24 and the small distillation tower 25 are supplied to the heat exchanger 22 and are subjected to heat exchange with the hydrocarbon liquefied gas supplied from the storage tank to the heater 23 to heat the hydrocarbon liquefied gas while being cooled and liquefied.

As such, the hydrocarbon liquefied gas is heated in the heat exchanger 22 before being supplied to the heater 23, thereby reducing energy consumption (that is, reducing the capacity of the heater). Further, since the low calorific components are cooled and liquefied in the heat exchanger 22, the high pressure pump 26 can be used to transfer the hydrocarbon liquefied gas, thereby reducing power as compared with the transfer of the gas components using a compressor.

The low calorific components cooled and liquefied while passing through the heat exchanger 23 are supplied to the evaporator 27 by the high pressure pump 26 and are evaporated by the evaporator 27 to be supplied as natural gas to consumers.

As such, according to the second embodiment, LNG may be separated into the high calorific components and the low calorific components by the separator 24, and the small distillation tower 25 may be further used for a more precise separation of the high calorific components from LNG, thereby satisfying the requirements for the heating value demanded by consumers without adding nitrogen.

Further, as in the first embodiment, the high calorific components separated by the separator 24 and the small distillation tower 25 may be used as fuel for generators and the like. In this case, it is possible to omit a storage tank or other facilities for storing the separated liquid components, that is, the high calorific components. Alternatively, the separated high calorific components may be stored in a separate storage tank and sold later.

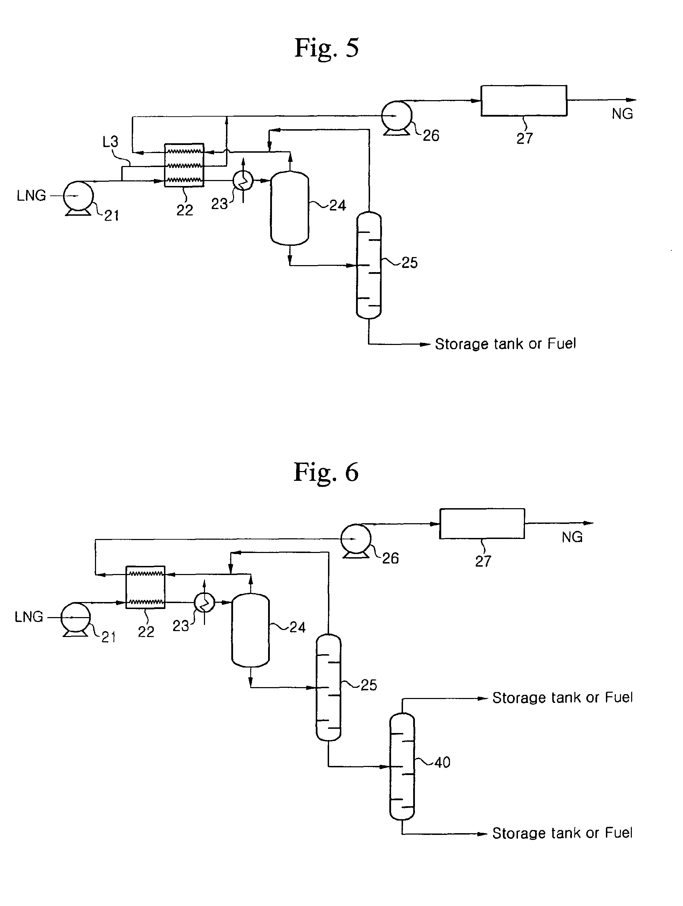

Referring to Figure 5, the apparatus for regasifying hydrocarbon liquefied gas according to the third embodiment is generally similar to the apparatus according to the second embodiment, except for a bypass line L3, which bypasses some of the hydrocarbon liquefied gas, supplied from the storage tank to the separator 24, toward a downstream side of the separator 24. For convenience of description, the same or similar components as those of the second embodiment will be denoted by the same reference numerals and a detailed description thereof will be omitted herein.

The bypass line L3 is branched from a supply line which supplies hydrocarbon liquefied gas from the storage tank to the separator 24, and more specifically from an upstream side of the heat exchanger 22 in the supply line. The branched bypass line L3 passes through the heat exchanger and is connected at an upstream side of the high pressure pump 26 to a discharge line which transfers gas components separated by the separator 24 and liquefied through the heat exchanger 22. As a result, the hydrocarbon liquefied gas containing the high calorific components from the storage tank is bypassed towards the high pressure pump 26 through the bypass line L3.

According to the third embodiment, the bypass line L3 causes reduction in the amount of hydrocarbon liquefied gas to be processed by the separator 24. Therefore, the gas components separated by the separator 24, that is, the low calorific components, are subjected to heat exchange with the hydrocarbon liquefied gas supplied from the storage tank to the separator 24 through the heat exchanger 22, so that the amount of gas components can be reduced when liquefying the gas components. As the amount of gas components to be liquefied is reduced, the heat exchanger 22 can liquefy the gas components with greater ease.

According to the third embodiment, if liquefaction of the gas components is not satisfactorily performed by the heat exchanger 22, some amount of hydrocarbon liquefied gas is bypassed through the bypass line L3, so that the gas components separated by the separator 24 (and the small distillation tower 25) can be satisfactorily liquefied.

Further, according to the third embodiment, since the amount of high calorific components processed by the separator 24 and the small distillation tower 25 is reduced, the treatment capacities of the separator 24, the small distillation tower 25 and other associated devices can be reduced, thereby enabling size reduction of the apparatus and energy reduction.

Referring to Figure 6, the apparatus for regasifying hydrocarbon liquefied gas according to the fourth embodiment is generally similar to the apparatus according to the second embodiment except that a first small distillation tower 25 and a second small distillation tower 40 are consecutively arranged. For convenience of description, the same or similar components as those of the second embodiment will be denoted by the same reference numerals and a detailed description thereof will be omitted herein.

When there is a need for a precise separation of hydrocarbon components for sale thereof, small distillation towers 25, 40 may be consecutively arranged as shown in Figure 6. Although two small distillation towers 25, 40 are shown in Figure 6, two or more small distillation towers may be used as needed.

In Figure 6, after separation by the second small distillation tower 40, hydrocarbon components discharged from a lower end of the second small distillation tower 40 may be stored in a separate storage tank (not shown) or may be used as fuel for generators and the like without being stored therein. Further, hydrocarbon components discharged from an upper end of the second small distillation tower 40, that is, gas components, may be cooled and liquefied through heat exchange with the hydrocarbon liquefied components in the storage tank to be stored in another storage tank (not shown) or used as fuel for the generator and the like. The hydrocarbon liquefied components stored in the storage tank after a precise separation can be sold later or used as fuel.

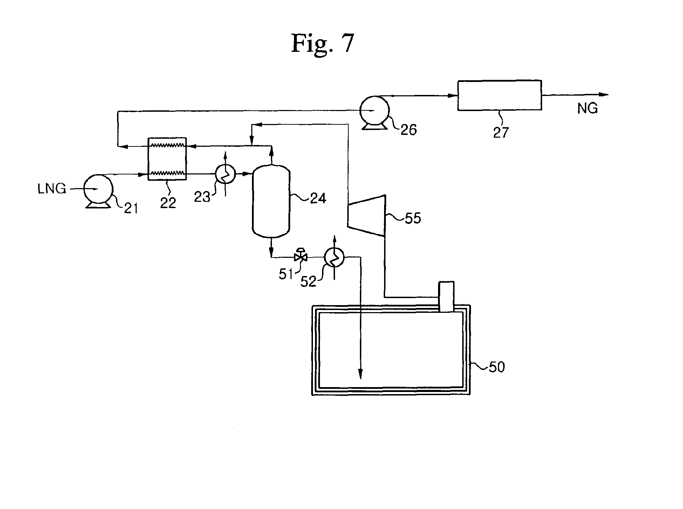

Referring to Figure 7, the apparatus for regasifying hydrocarbon liquefied gas according to the fifth embodiment enables additional adjustment of the heating value through gas-liquid separation in a separate storage tank 50 by storing liquid components separated by the separator 24, that is, high calorific components, at a suitable temperature and pressure in the separate storage tank 50, instead of additionally separating the same using the small distillation tower. As such, the apparatus according to the fifth embodiment is generally similar to the apparatus according to the second embodiment, except for the use of the separate storage tank 50 as a secondary separator. For convenience of description, the same or similar components as those of the second embodiment will be denoted by the same reference numerals in Figure 7 and a detailed description thereof will be omitted herein.

According to the fifth embodiment, the liquid components separated by the separator 24 are expanded to atmospheric pressure by an expansion valve 51 and are then stored in the separate storage tank 50. Before being stored in the storage tank 50, the liquid may also be heated by another heater 52 as needed. Since the liquid components are heated and stored in the storage tank 50, there is no need for an installation of a separate heat insulation member to the storage tank 50, thereby enabling reduction in installation and maintenance costs.

For the storage tank 50 for storing the liquid components separated by the separator 24, one of a plurality of storage tanks installed in an on-land or offshore plant which is provided with the apparatus for regasifying hydrocarbon liquefied gas according to any embodiment of the present invention may be used.

The liquid components primarily separated by the separator 24 are sent to the separate storage tank 50 after expansion and heating to a suitable temperature and pressure. In the primarily separated liquid components, low calorific components are evaporated during the expansion and heating, and are secondarily separated in the storage tank 50. Then, the secondarily separated low calorific components are transferred by a compressor 55 to be mixed with gas components primarily separated by the separator 24 and are subjected to cooling and liquefaction in the heat exchanger 22. As such, the separate storage tank 50 serves as another separator, that is, a gas-liquid separating device, to allow secondary separation of the primarily separated components into a gas component of a lower heating value and a liquid component of a higher heating value.

Boil-Off Gas (BOG) generated in the separate storage tank 50 may be discharged outside, compressed and transferred by the compressor 55, and mixed with the gas components separated by the separator 24. As described above, since the low calorific component is evaporated at a lower temperature than the high calorific component, BOG in the separate storage tank 50 can be considered a low calorific component.

As described above, according to the second to fifth embodiments of the invention, most of the low calorific components can be simply separated using the separator without adding nitrogen to LNG or using a large expensive distillation tower to reduce the heating value in the LNG regasification facility, so that the high calorific components to be processed by an additional process can be significantly reduced to 10% or less of an initial supply amount. As a result, the apparatus according to any of the embodiments of this invention enables significant reduction in size of a facility for additional distillation, thereby reducing initial investment and operation costs.

If there is no need for additional distillation, the high calorific components primarily separated by the separator are stored in a separate storage tank after expansion to atmospheric pressure and heating, so that the heating value can be finally adjusted by the additional separation of the low calorific gas components and the high calorific liquid components in the separate storage tank, and the high calorific liquid components can be also stored therein.

As such, according to the second to fifth embodiments, most of the LNG can be processed (that is, evaporated and supplied to consumers) by satisfying the heating value conditions using the separator.

Further, the gas components separated in the separator are subjected to heat exchange with the hydrogen liquefied gas to thereby reduce the capacity of the heater. Additionally, the gas components separated by the separator are liquefied via heat exchange with the hydrogen liquefied gas to be transferred by the high pressure pump 26, thereby enabling power reduction as compared with the transfer of the gas components by a compressor.

BOG, a low calorific gas separated in the storage tank, may be subjected to liquefaction and mixing with the hydrocarbon liquefied gas in a recondenser, followed by evaporation in an evaporator for supply to consumers, and, the gas components separated by the small distillation tower may be liquefied by heat exchange with the hydrocarbon liquefied gas, thereby realizing a highly efficient process.

In other words, according to this invention, when an additional separation of the high calorific hydrocarbon components occurs in the small distillation tower 25 or 40, the storage tank 50 or the like, there can be a need for a separation of hydrocarbon components, which have a smaller number of carbon atoms to undergo earlier evaporation (that is, ethane, propane and butane are sequentially evaporated and separated in this order as temperature rises), followed by liquefaction for storage or transfer thereof. Here, energy for liquefying ethane, propane, and the like may be obtained by recovering cold energy, which is generated upon evaporation of the liquefied gas in one of the heat exchanger 22, the evaporator 27 and the heater 52. Since the heat exchanger 22, the evaporator 27 and the heater 52 have temperatures of about -160°C, -80°C and -60°C, respectively, it is possible to use cold energy of a suitable temperature as needed.

Further, although the heater 23 and the separator 24 are shown as separate components in Figures 3 to 7, the heater 23 may be integrally mounted inside the separator 24.

The apparatus for regasifying hydrocarbon liquefied gas according to this invention may be used for a marine structure which suffers difficulty in supplying nitrogen, that is, LNG RV, LNG FSRU, and the like. The LNG RV is a marine structure which installs an LNG regasification facility to a self-powered floating LNG carrier capable of sailing long distances. The LNG FSRU is a floating marine structure that stores LNG discharged from an LNG carrier in a storage tank at sea distant from land and supplies LNG to consumers on land after regasification of the LNG as needed.

It should be noted that the apparatus for regasifying hydrocarbon liquefied gas according to this invention can be provided not only to the marine structures such as LNG RV and LNG FSRU, but also to any other LNG regasification facilities on land or sea. Moreover, the apparatus for regasifying hydrocarbon liquefied gas according to this invention can be provided not only to the marine structures such as LNG RV and LNG FSRU, but also to other marine structures.

Although some embodiments have been provided in conjunction with the accompanying drawings to illustrate the present invention, it should be noted that the present invention is not limited to the embodiments and drawings, and that various modifications and changes can be made by those skilled in the art without departing from the spirit and scope of the present invention as defined only by the appended claims and equivalents thereof.

## Claims

1. An apparatus for processing a hydrocarbon liquefied gas mixture, comprising:
a storage tank; and
a hydrocarbon liquefied gas mixture accommodated in the storage tank,
wherein the mixture contains hydrocarbon components composed of methane, ethane, propane and butane, and is produced by liquefying raw natural gas without changing the relative ratio of methane, ethane, propane and butane in the raw natural gas immediately after extraction from a gas well.

2. An apparatus for processing a hydrocarbon liquefied gas mixture, comprising:
a storage tank capable of accommodating a hydrocarbon liquefied gas mixture produced by liquefying raw natural gas without changing the relative ratio of methane, ethane, propane and butane in the raw natural gas immediately after extraction from a gas well.

3. An apparatus for processing a hydrocarbon liquefied gas mixture, comprising:
a storage tank; and
a hydrocarbon liquefied gas mixture accommodated in the storage tank,
wherein the mixture contains methane, ethane, propane, and butane.

4. The apparatus according to claim 3, wherein the mixture is free from hydrocarbon molecules having a greater molecular weight than butane.

5. The apparatus according to any one of claims 1 to 4, wherein the mixture is maintained at a vapor pressure of 2.5 bars or less and a temperature of -163°C - - 130°C in the storage tank.

6. The apparatus according to claim 5, wherein the mixture has a vapor pressure of 0.7 bars or less in the storage tank.

7. The apparatus according to claim 5, wherein the mixture has a vapor pressure of 0.25 bars or less in the storage tank.

8. The apparatus according to any one of claims 1 to 4, wherein the mixture is maintained at a temperature of -163°C - -130°C in the storage tank.

9. The apparatus according to any one of claims 1 to 4, wherein the storage tank comprises at least one storage tank having a total storage capacity greater than 100,000m³.

10. The apparatus according to claim 10, wherein the mixture contains 2.6 mol% - 13 mol% of propane with respect to a total amount thereof.

11. The apparatus according to any one of claims 1 to 4, wherein the mixture contains 5 mol% - 13 mol% of propane with respect to a total amount thereof.

12. The apparatus according to any one of claims 1 to 4, wherein the mixture is produced by a method comprising: obtaining natural gas from the gas well; and liquefying the natural gas without removing butane from the natural gas or adding at least one of ethane, propane and butane to the natural gas.

13. The apparatus according to claim 12, wherein the method further comprises removing hydrocarbon molecules having a greater molecular weight than butane from the natural gas

14. A method of processing a hydrocarbon liquefied gas mixture, comprising:
preparing a storage tank;
connecting a transportation tank of a carrier to the storage tank, the transportation tank accommodating a hydrocarbon liquefied gas mixture comprising methane, ethane, propane and butane, the mixture being free from hydrocarbon molecules having a greater molecular weight than butane; and
allowing the storage tank to receive the mixture from the transportation tank.

15. A method of processing a hydrocarbon liquefied gas mixture, comprising:
preparing a transportation tank; and
supplying a hydrocarbon liquefied gas mixture to the transportation tank, the mixture comprising methane, ethane, propane and butane, and being free from hydrocarbon molecules having a greater molecular weight than butane.

16. A method of processing a hydrocarbon liquefied gas mixture, comprising:
allowing a transportation tank to receive a hydrocarbon liquefied gas mixture produced by liquefying raw natural gas without changing the relative ratio of methane, ethane, propane and butane in the raw natural gas immediately after extraction from a gas well.

17. The method according to any one of claims 14 to 16, wherein the mixture is maintained at a vapor pressure of 2.5 bars or less and a temperature of -163°C - - 130°C in the storage tank.

18. The method according to claim 17, wherein the mixture has a vapor pressure of 0.7 bars or less in the storage tank.

19. The method according to claim 17, wherein the mixture has a vapor pressure of 0.25 bars or less in the storage tank.

20. The method according to any one of claims 14 to 16, wherein the mixture is maintained at a temperature of -163°C - -130°C in the storage tank.

21. The method according to any one of claims 14 to 16, wherein the storage tank is provided to process the hydrocarbon liquefied gas mixture and comprises at least one storage tank having a total storage capacity greater than 100,000m³.

22. The method according to any one of claims 14 to 16, wherein the mixture contains 2.6 mol% - 13 mol% of propane with respect to a total amount thereof.

23. The method according to claim 22, wherein the mixture contains 5 mol% - 10 mol% of propane with respect to a total amount thereof.

24. The method according to any one of claims 14 to 16, further comprising:
maintaining the mixture at a vapor pressure of 2.5 bars or less in the storage tank.

25. The method according to any one of claims 14 to 16, further comprising:
obtaining the natural gas from the gas well; and
producing the hydrocarbon liquefied gas mixture by liquefying the natural gas without removing butane from the natural gas or adding at least one of ethane, propane and butane to the natural gas.

26. The method according to claim 25, further comprising:
removing hydrocarbon molecules having a greater molecular weight than butane from the natural gas.
